# EUROPÄISCHE PATENTSCHRIFT

(11) **EP 0 433 926 B1**
(45) Veröffentlichungstag und Bekanntmachung des Hinweises auf die Patenterteilung: **30.08.1995**
(21) Anmeldenummer: 90124303.0
(22) Anmeldetag: 15.12.1990
(51) Int. Cl.: B05D 1/06, B05D 7/14, C08K 7/08

(54) **Verfahren zur Pulverbeschichtung mit Fluorthermoplasten**
Method for powder-coating with thermoplastic fluorine-compounds
Procédé pour le revêtement par poudre utilisant des thermoplastiques fluorés

(30) Priorität: 19.12.1989 DE 3941849
(43) Veröffentlichungstag der Anmeldung: 26.06.1991
(73) Patentinhaber: WHITFORD CORPORATION, West Chester Pennsylvania 19380-0110 (US)
(72) Erfinder: Blädel, Hermann, W-8269 Burgkirchen (DE); Hendriock, Hans-Jürgen, Dr., W-6108 Weiterstadt (DE)
(74) Vertreter: Lepeudry-Gautherat, Thérèse

(56) Entgegenhaltungen:
- EP-A- 0 231 001
- EP-A- 0 258 731
- US-A- 4 107 356
- US-A- 4 180 609
- US-A- 4 590 234
- AT-E-10910

## Beschreibung

Die Erfindung betrifft ein Verfahren zur elektrostatischen Pulverbeschichtung von metallischen oder an mindestens einer Oberfläche metallisierten Substraten mit einem aus der Schmelze verarbeitbaren Fluorpolymeren.

Die Ausbildung von Fluorpolymer-Beschichtungen nach der Methode des elektrostatischen Auftrags von pulverförmigen Fluorpolymeren auf metallische Substrate ist bekannt. Dabei sind relativ hohe Schichtdicken erwünscht, weil Fluorpolymere eine gewisse Permeabilität für Gase, Flüssigkeiten und Lösungen aufweisen. Eine solche Permeation führt jedoch bei agressiven Stoffen zur Korrosion des metallischen Substrats und zur Zerstörung der Bindung zwischen Substrat und Beschichtung. Da jedoch ab einer gewissen Schichtdicke die aufgetragene Fluorpolymer-Schicht elektrisch isolierend wirkt, das heißt, die elektrostatische Anziehung nicht mehr wirksam ist und die hinzukommenden Fluorpolymer-Teilchen nur noch aufgeschmolzen werden, ist die Erzielung hoher Schichtdicken, insbesondere auch bei Auftrag mehrerer Schichten, nicht ohne große Schwierigkeiten möglich.

Es ist bereits versucht worden, diese Schwierigkeiten dadurch zu beheben, daß gemäß der US-PS 4 107 356 Kohlefasern mit dem aus der Schmelze verarbeitbaren Fluorpolymeren vermischt werden, so daß die Leitfähigkeit auch bei größeren Schichtdicken erhalten bleibt. Um dies zu erreichen, sind jedoch relativ hohe Anteile von Kohlefasern erforderlich. Dies wiederum beeinträchtigt die erwünschte Antiadhäsivität des Fluorpolymer-Überzugs, da auf diese Weise das Fluorpolymere gewissermaßen "verdünnt" wird. Auch sind solche Mischungen empfindlich gegen Oxidation und oxidierende Mittel, insbesondere bei den hohen Temperaturen, die beim Einbrennen solcher Überzüge herrschen. So kann es erforderlich werden, Mischungen von Kohlefasern und hochschmelzenden Fluorpolymeren unter Inertgas zu verarbeiten. Schließlich ist es aus ästhetischen Gründen unbefriedigend, daß diese Überzüge nur in schwarzer Farbe zur Verfügung stehen.

Aus der EP-OS 258 731 ist es bekannt, Pulverbeschichtungen von aus der Schmelze verarbeitbaren Fluorpolymeren im Mehrschichtauftrag so herzustellen, daß die jeweils zuletzt aufgetragene Schicht einen niedrigeren Schmelzpunkt und/oder ein höheres Fließvermögen als die darunterliegende Schicht aufweist. Damit wird die beim Einbrennen jeweils geschmolzene Schicht unterhalb derjenigen Dicke gehalten, bei der ein durch Gravitation bedingtes Abfließen der Schmelze stattfindet. Auf diese Weise können höhere Schichtdicken erzielt werden, jedoch ist das Verfahren etwas aufwendig und nur mit mindestens zwei hinsichtlich Fließvermögen und/oder Schmelzpunkt unterschiedlichen Fluorpolymeren ausführbar.

Ferner ist aus der EP-OS 330 048 bekannt, zu höheren Schichtdicken zu gelangen, wenn bei der Pulverbeschichtung ein Gemisch von 15 bis 65 Vol.-% an Glaskugeln mit dem Fluorpolymeren für die Ausbildung der Grundschicht eingesetzt und anschließend mindestens eine Deckschicht aufgebracht wird. Auch hier gilt, daß der relativ hohe Anteil an Glaskugeln die für den Fluorpolymer-Überzug erwünschten Eigenschaften störend beeinflußt. Außerdem sind - da die Deckschichten aus Fluorpolymeren ohne Beimischung von Glaskugeln bestehen - mindestens zwei verschiedene Mischungen für die Ausbildung des gesamten Überzugs erforderlich.

Es besteht also nach wie vor ein Bedürfnis nach einem einfach zu handhabenden Verfahren, das es gestattet, hohe Schichtdicken zu erreichen.

Dies gelingt gemäß der vorliegenden Erfindung durch ein Verfahren der eingangs genannten Art, das dadurch gekennzeichnet ist, daß die Pulverbeschichtung mit einem Gemisch aus dem aus der Schmelze verarbeitbaren Fluorpolymeren und aus 0,1 bis 4 Gew.-%, bezogen auf Fluorpolymeres, an Kaliumtitanat-Fasern vorgenommen wird.

Die im erfindungsgemäßen Verfahren in Abmischung mit aus der Schmelze verarbeitbaren Fluorpolymeren eingesetzten Kaliumtitanat-Fasern sind bekannt. Es handelt sich um Einkristalle des Kaliumtetratitanats, Kaliumhexatitanats und vorzugsweise Kaliumoctatitanats. Die Herstellung von Kaliumtitanat-Fasern ist bekannt, beispielsweise aus der US-PS 2 841 470. Auch Mischungen von Kaliumtitanat-Fasern mit aus der Schmelze verarbeitbaren Fluorpolymeren sind bekannt aus der US-PS 4 590 234, wo solche Gemische für den Spritzguß, die Schmelzextrusion und ähnliche Verformungsmethoden beschrieben werden, oder aus den GB-Patentschriften 1 092 014 und 1 107 161, wo wäßrige Dispersionen solcher Fluorpolymerer beschrieben werden, enthaltend Mineralfasern, die mit oberflächenaktiven Mitteln vorbehandelt worden sind. Diese Dispersionen dienen der Beschichtung von metallischen Substraten aus flüssiger Phase. In allen genannten Schriften findet sich kein Hinweis auf einen Einsatz solcher Gemische bei der Pulverbeschichtung. Auch liegen die Anteile der Mineralfasern in diesen Gemischen erheblich höher.

Die im erfindungsgemäßen Verfahren eingesetzten Kaliumtitanat-Fasern besitzen eine mittlere Faserlänge von 5 bis 1000, vorzugsweise von 10 bis 100 »m und einen mittleren Faserdurchmesser von 0,1 bis 2, vorzugsweise von 0,2 bis 0,5 »m. Das Verhältnis mittlere Faserlänge/mittlerer Faserdurchmesser liegt bei 50 bis 500, vorzugsweise bei 50 bis 200.

Die im Rahmen des erfindungsgemäßen Verfahrens verwendeten, aus der Schmelze verarbeitbaren Fluorpolymeren besitzen üblicherweise bei der Verarbeitungstemperatur eine Schmelzviskosität von ≦ 1 · 10⁶ Pa s. Solche aus der Schmelze verarbeitbaren, thermoplastischen Fluorpolymere können zum Beispiel Homopolymere sein, wie Polyvinylidenfluorid, Polyvinylfluorid oder vorzugsweise Polychlortrifluorethylen. Ebenso können dies Copolymere sein, vorzugsweise solche, die neben copolymerisierten Einheiten des Tetrafluorethylens oder Chlortrifluorethylens noch mindestens ein weiteres ethylenisch ungesättigtes Comonomeres in ausreichender Menge enthalten, um die Verarbeitbarkeit aus der Schmelze zu gewährleisten. Solche Copolymere werden insbesondere ausgewählt aus folgenden Gruppen:
a) Copolymere des Tetrafluorethylens mit höheren Perfluorolefinen mit 3 bis 10 C-Atomen, insbesondere mit Hexafluorpropylen; Copolymere des Tetrafluorethylens mit Perfluoralkylperfluorvinylethern der Formel CF₂=CF-ORf, worin Rf ein perfluorierter Alkylrest mit 1 bis 10 C-Atomen ist, vorzugsweise mit Perfluorpropylperfluorvinylether; Copolymere des Tetrafluorethylens, die sowohl Hexafluorpropylen als auch einen der genannten Perfluoralkylperfluorvinylether enthalten, insbesondere Perfluorpropylperfluorvinylether;
b) Copolymere des Tetrafluorethylens mit Ethylen, wobei solche Copolymere bevorzugt mindestens ein weiteres copolymerisierbares Monomeres enthalten, häufig auch deren zwei oder mehr. Solche Comonomere sind vorzugsweise ausgewählt aus der Gruppe der perfluorierten Olefine, wobei Hexafluorpropylen bevorzugt ist; aus der Gruppe der Perfluoralkylperfluorvinylether der oben angegebenen Formel, wobei Perfluorpropylperfluorvinylether bevorzugt ist; aus der Gruppe der fluorhaltigen Olefine, bevorzugt 3,3,3-Trifluor-2-trifluormethylpropylen; aus der Gruppe der Vinylester sowie aus der Gruppe von Vinylidenfluorid und Trifluorchlorethylen.
   Solche Copolymere vom Typ Tetrafluorethylen/Ethylen, gegebenenfalls mit weiteren Monomeren, bestehen aus höchstens 60 Mol-% Tetrafluorethylen, 60 bis 40 Mol-% Ethylen und 0 bis 10 Mol-% des Anteils an den genannten dritten und gegebenenfalls vierten und weiteren Monomeren;
c) Copolymere des Tetrafluorethylens mit Vinylidenfluorid, wobei solche Copolymere vorzugsweise noch mindestens ein weiteres, ethylenisch ungesättigtes, vorzugsweise fluorhaltiges Comonomeres enthalten; insbesondere kommen dafür Hexafluorpropylen oder ein Perfluoralkylperfluorvinylether in Betracht, gegebenenfalls auch die Kombination von beiden; in thermoplastischen, aus der Schmelze verarbeitbaren Copolymeren dieses Typs ist das Tetrafluorethylen in Anteilen von 50 bis 80, im Falle der Ter- und Quaterpolymeren von 50 bis 65 Mol-%, das Vinylidenfluorid in Anteilen von mehr als 20 Mol-% enthalten; eine bevorzugte Kombination ist Tetrafluorethylen/Vinylidenfluorid/Hexafluorpropylen;
d) Copolymere von Tetrafluorethylen mit Chlortrifluorethylen, wobei sowohl Tetrafluorethylen als auch Chlortrifluorethylen der überwiegende Bestandteil sein kann;
e) Copolymere des Chlortrifluorethylens mit ethylenisch ungesättigten fluorhaltigen Monomeren, wie insbesondere Hexafluorpropylen, Tetrafluorethylen und Vinylidenfluorid;
f) Copolymere des Chlortrifluorethylens mit Ethylen, wobei auch diese Copolymere vorzugsweise mindestens ein weiteres, häufig auch zwei oder drei weitere ethylenisch ungesättigte Comonomere enthalten können, welche aus den gleichen Gruppen ausgewählt werden, wie dies oben für Copolymere des Typs Tetrafluorethylen/Ethylen angegeben ist.

Bezüglich der Herstellung von Copolymeren der obengenannten Art wird beispielsweise auf die folgenden US-Patentschriften verwiesen:
2 946 763, 3 132 123, 3 132 124, 4 029 868, 4 262 101,
3 624 250, 3 859 262, 3 817 951, 3 960 825, 3 847 881,
4 123 602, 2 468 054, 3 235 537, 2 513 312, 2 662 072,
3 053 818, 2 738 343, 2 752 332; ferner auf die europäischen Patentschriften 2 809 und 50 437 und die belgische Patentschrift 844 965.

Das Abmischen der Kaliumtitanat-Fasern mit dem pulverförmigen, aus der Schmelze verarbeitbaren Fluorpolymeren, dessen mittlere Teilchengröße 5 bis 400, vorzugsweise 30 bis 200 »m betragen soll, kann in jeder üblichen Pulvermischvorrichtung erfolgen, die zur Herstellung homogener Gemische geeignet ist, beispielsweise einem Fluidmischer, Trommelmischer oder Taumelmischer.

Man kann jedoch auch von einer wäßrigen Dispersion, gegebenenfalls einer kolloidalen Dispersion des vorgesehenen Fluorpolymeren ausgehen, die mit einem Netzmittel versehen und aufkonzentriert worden sein kann, und rührt in diese die Kaliumtitanat-Fasern homogen ein. Die erhaltene Mischung wird dann weitergerührt oder es wird ein übliches Koagulationsmittel für Fluorpolymer-Dispersionen zugesetzt oder es werden beide Maßnahmen ergriffen.

Nach vollständiger Koagulation wird die Mischung getrocknet und gegebenenfalls gemahlen.

Die elektrostatische Pulverbeschichtung ist ein in allen Einzelheiten bekanntes Verfahren, ein metallisches Substrat oder ein Substrat mit mindestens einer auf der Beschichtungsseite liegenden metallischen Oberfläche (beispielsweise eine metallisierte hochtemperaturbeständige Kunststoffolie oder -platte oder ein metallbeschichtete Keramik- oder Glasplatte) mit einem Polymerüberzug zu versehen. Als metallisches Substrat kann jedes beliebige Metall, das bei der Einbrenntemperatur des jeweils verwendeten Fluorpolymeren nicht geschädigt wird, fungieren, beispielsweise Stahl, Edelstahl, Eisen, Aluminium, Kupfer, Nickel, Chrom oder auch eine Legierung, wie Messing.

Gegebenenfalls kann das Substrat auf Temperaturen, die 20 bis 80 °C über dem Schmelzpunkt des jeweils eingesetzten Fluorpolymeren liegen, vorgeheizt werden, um ein Verfließen der Schicht schon während des Beschichtungsvorgangs zu erreichen. Für die Beschichtung wird das Substrat, in der Praxis meist das gesamte zu beschichtende Formteil, üblicherweise als Erde geschaltet und das aufzubringende Pulvergemisch positiv oder negativ aufgeladen, entweder durch Reibungsaufladung oder im Fall der negativen Aufladung auch durch eine negativ geladene Elektrode, die sich beispielsweise ringförmig in der zum Auftrag verwendeten Pulversprühvorrichtung befinden kann. Unter dem Begriff elektrostatische Pulverbeschichtung soll hier auch die Methode des elektrostatischen Wirbelsinterns verstanden werden, bei der Substrat und Pulver in gleicher Weise aufgeladen und dann im Wirbelbett beschichtet werden. Ganz allgemein umfaßt dieser Begriff alle Verfahren, bei der die Pulverbeschichtung mittels aufgebrachter elektrostatischer Kräfte erfolgt.

Im Anschluß an den Beschichtungsvorgang werden die beschichteten Substrate bei Temperaturen, die um 20 bis 80 °C oberhalb des Schmelzpunktes des jeweils eingesetzten Fluorpolymeren liegen, unter Verschmelzen und Verfließen der Schicht eingebrannt.

Vor dem eigentlichen Beschichtungsvorgang wird die zu beschichtende Oberfläche nach üblichen Methoden entfettet, beispielsweise durch Dampfphasenentfettung, Behandlung in alkalischen Bädern oder gegebenenfalls auch durch das Erhitzen des zu beschichtenden Gegenstandes auf circa 400 bis 450 °C.

Eine Verbesserung der Haftung der Beschichtung kann durch Aufrauhen des Untergrundes, beispielsweise durch Sandstrahlen oder Ätzen, erzielt werden, gegebenenfalls auch durch das Auftragen von keramischen oder metallischen Zwischenschichten mit großer Oberflächenrauhigkeit, beispielsweise durch Flammspritzen oder Plasmabeschichtung. Werden sehr große Anforderungen an die Haftung der Beschichtung gestellt, so kann vor dem Auftragen der mit Kaliumtitanat-Fasern abgemischten Fluorpolymeren noch eine Haftvermittlerschicht angebracht werden, die üblicherweise aus dem gleichen Fluorthermoplasten unter Zusatz haftvermittelnder Substanzen besteht. Als Haftvermittler für solche Fluorthermoplasten eigenen sich hochtemperaturbeständige Bindeharze, wie Epoxidharze, Polyamide, Polyamidimide, Polyimide, Polytriketoimidazolidine, Polyphenylensulfide, Polyethersulfide, Polyetherketone, Polyhydantoine oder auch anorganische Stoffe, wie beispielsweise Alkalisilikate, Chromsäureanhydrid, Phosphorsäure oder Aluminiumchlorphosphate. Die Haftvermittlerschicht wird als Pulver nach den üblichen Pulverbeschichtungsmethoden oder auch in Form von Dispersionen, Suspensionen oder Lösungen durch Spritzen, Tauchen oder Streichen aufgebracht. Nach dem Auftragen wird die Haftvermittlerschicht gegebenenfalls getrocknet und eingebrannt.

Durch wiederholtes Auftragen und Einbrennen lassen sich so Schichtdicken erzielen, die zwei- bis dreimal so groß sind wie mit dem gleichen, nicht mit Kaliumtitanat-Fasern versehenen Fluorpolymerpulver, ohne daß es dabei zum Abfließen der Beschichtung kommt.

Es ist überraschend, daß aufgrund des Verhaltens der Kaliumtitanat-Faser im elektrostatischen Feld während der Pulverbeschichtung mit einer so geringen Menge ein so beträchtlicher Effekt hinsichtlich der erreichbaren Schichtdicke erzielt werden kann. Daneben weisen die nach dem erfindungsgemäßen Verfahren hergestellten Überzüge eine hohe Chemikalienbeständigkeit, eine äußerst geringe Durchlässigkeit für Wasser, Dampf und Lösungsmitteldämpfe und eine hohe Wetterfestigkeit auf.

Wird eine besonders glatte Oberfläche gewünscht, so können zum Schluß noch eine oder mehrere Deckschichten aus einem aus der Schmelze verarbeitbaren Fluorpolymeren ohne Zusatz von Kaliumtitanat-Faser aufgebracht werden. Im Gegensatz zu den mit Glaskugeln gefüllten Mischungen der EP-OS 330 048 ist dies hier aber nicht zwingend erforderlich. Die Deckschicht oder die Deckschichten bestehen vorzugsweise aus dem gleichen Fluorpolymer-Material, das auch in der Mischung der darunterliegenden Schichten enthalten ist, jedoch ist dies nicht zwingend erforderlich. Werden mehrere Deckschichten aufgebracht, so können diese aus dem gleichen oder auch aus unterschiedlichen Fluorpolymeren bestehen. Dabei kann gegebenenfalls von dem Verfahren der EP-OS 258 731 Gebrauch gemacht werden, das heißt es werden mehrere Schichten aufgetragen, die nach außen hin aus Fluorpolymeren mit sukzessiv niedrigerem Schmelzpunkt oder höherem Fließvermögen bestehen.

Sowohl die Grund- als auch die Deckschichten können mit üblichen verstärkenden Füllstoffen versehen oder mit Pigmenten eingefärbt werden. Solche verstärkenden Füllstoffe oder Pigmente sind beispielsweise Glasfasern, Ruß, Titandioxid, Eisenoxide, Chromoxid, Kobaltblau, Antimontrioxid, Cadmiumsulfid oder -selenid oder auch hochtemperaturbeständige organische Pigmente.

Das erfindungsgemäße Verfahren ist geeignet zum Beschichten von Metallgegenständen oder Gegenständen mit metallischen Oberflächen aller Art. Insbesondere wird es angewandt auf Beschichtung oder Auskleidung von Apparaten oder Teilen, die korrosivem Angriff durch Gase, Flüssigkeiten oder Festkörper ausgesetzt sind, beispielsweise Rührkessel, Reaktionsbehälter, Lagertanks, Rohre, Förderbänder, Rührorgane und dergleichen.

Die Erfindung wird durch folgende Beispiele erläutert:

### Beispiel 1

Ein Stahlblech (Abmessungen 100 x 30 x 0,5 mm) wird zunächst durch Erhitzen auf 450 °C entfettet und dann durch Sandstrahlen oberflächlich aufgerauht. Sodann wird eine Haftvermittlerschicht durch Sprühen aufgebracht, die aus einer Lösung von Polyamidimid in N-Methylpyrrolidon/Xylol unter Zusatz eines Copolymeren von Tetrafluorethylen, Ethylen und Hexafluorpropylen (Zusammensetzung 66 Gew.-% Tetrafluorethylen, 16 Gew.-% Ethylen, 18 Gew.-% Hexafluorpropylen; Gewichtsverhältnis Polyamidimid : Copolymer = 1 : 1) und von 20 Gew.-%, bezogen auf Gesamtpolymergehalt, an schwarzem Eisenoxid besteht. Diese Haftvermittlerschicht wird bei 150 °C getrocknet und bei 260 °C eingebrannt. Die Schichtdicke beträgt 30 »m.

Das noch 260 °C heiße Stahlblech wird geerdet. Sodann wird mittels einer elektrostatischen Pulversprühpistole ein Copolymerpulver (gleiche Zusammensetzung wie im Haftvermittler) mit einer mittleren Teilchengröße von 65 »m, vorgemischt mit 1 Gew.-%, bezogen auf Copolymer, an Kaliumoctatitanat-Faser mit einer mittleren Länge von 15 mm, einem mittleren Durchmesser von 0,2 mm und einem Verhältnis Länge/Durchmesser = 75, das mit einer Spannung von 90 kV aufgeladen wird, auf das Substrat aufgebracht und die Schicht bei 260 °C in einem Ofen 10 Minuten eingebrannt.

Auf die noch heiße Schicht wird dann auf die beschriebene Weise eine weitere Schicht aufgesprüht. Bevor ein leichtes Abfließen erkennbar wird, können insgesamt sieben Teilschichten zu einem Mehrschichtüberzug aufgebaut werden, dessen Gesamtdicke 3000 »m und die Dicke der Einzelschicht somit im Mittel etwa 430 »m beträgt. Wiederholt man den gleichen Versuch ohne Zusatz von Kaliumtitanat, so erreicht man lediglich bei sechs Einzelschichten eine Gesamtdicke von 1500 »m und eine mittlere Schichtdicke der einzelnen Schicht von 250 »m.

### Beispiel 2

Ein Stahlblech (Abmessungen 100 x 30 x 1 mm) wird einer Untergrundbehandlung, wie in Beispiel 1, unterzogen und sodann ohne Auftrag eines Haftvermittlers auf 360 °C aufgeheizt. Das vorerhitzte Substrat wird nach der gleichen Methode und mit der gleichen Vorrichtung wie in Beispiel 1 beschichtet, wobei eine Pulvermischung eines Copolymeren von Tetrafluorethylen, Perfluorpropylperfluorvinylether und Hexafluorpropylen (Zusammensetzung 95 Gew.-% Tetrafluorethylen, 1,8 Gew.-% Hexafluorpropylen, 3 Gew.-% Perfluorpropylperfluorvinylether) mit 0,5 Gew.-%, bezogen auf Copolymer, an Kaliumoctatitanat-Faser (Faserlänge, Faserdurchmesser und Verhältnis Länge/Durchmesser wie Beispiel 1) sowie 1 Gew.-% Polyphenylensulfid als Stabilisator verwendet wird. Der Überzug wird 10 Minuten lang bei 360 °C eingebrannt, und dieser Vorgang wird auf der noch heißen Schicht viermal wiederholt, ehe merkbares Abfließen eintritt. Die Gesamtdicke der Schicht beträgt 1500 »m, die mittlere Schichtdicke der Einzelschicht 300 »m. Wiederholt man den gleichen Versuch ohne den Zusatz von Kaliumtitanat, so erreicht man lediglich eine Gesamtschichtdicke von 600 »m und eine mittlere Schichtdicke des Einzelauftrags von 75 »m.

### Beispiel 3

Ein Stahlblech, mit den gleichen Abmessungen wie in Beispiel 2, wird zur Vorbereitung des Untergrundes für die Beschichtung vorbehandelt wie in Beispiel 1. Ohne Auftrag eines Haftvermittlers wird das Blech auf 350 °C vorgeheizt und nach der Methode und mit der Vorrichtung von Beispiel 1 beschichtet mit einem Gemisch aus einem Copolymeren von Tetrafluorethylen und Perfluorpropylperfluorvinylether (Zusammensetzung 97 Gew.-% Tetrafluorethylen, 3 Gew.-% Perfluorpropylperfluorvinylether) und 0,3 Gew.-% Kaliumoctatitanat-Faser (Abmessungen wie Beispiel 1). Das Einbrennen erfolgt bei 350 °C 15 Minuten lang. Ohne merkliches Abfließen kann der Vorgang dreimal wiederholt werden. Die erreichte Gesamtschichtdicke beträgt dann 2000 »m, die mittlere Schichtdicke der Einzelschicht 500 »m. Bei einem Kontrollversuch ohne Kaliumtitanat-Faser ist die Gesamtschichtdicke 500 »m und die Dicke der Einzelschicht 100 »m.

## Patentansprüche

1. Verfahren zur elektrostatischen Pulverbeschichtung von metallischen oder an mindestens einer Oberfläche metallisierten Substraten mit einem aus der Schmelze verarbeitbaren Fluorpolymeren, dadurch gekennzeichnet, daß die Pulverbeschichtung mit einem Gemisch aus dem aus der Schmelze verarbeitbaren Fluorpolymeren und aus 0,1 bis 4 Gew.-%, bezogen auf Fluorpolymeres, an Kaliumtitanat-Fasern vorgenommen wird.

2. Verfahren zur elektrostatischen Pulverbeschichtung gemäß Anspruch 1, dadurch gekennzeichnet, daß die Kaliumtitanat-Fasern im Gemisch eine Länge von 5 bis 1000 »m aufweisen.

3. Verfahren zur elektrostatischen Pulverbeschichtung gemäß Anspruch 1 oder 2, dadurch gekennzeichnet, daß die Kaliumtitanat-Fasern einen Durchmesser von 0,1 bis 2 »m aufweisen.

4. Verfahren zur elektrostatischen Pulverbeschichtung nach einem oder mehreren der Ansprüche 1 bis 3, dadurch gekennzeichnet, daß die Kaliumtitanat-Fasern ein Verhältnis von mittlerer Faserlänge/mittlerer Faserdurchmesser gleich 50 bis 500 aufweisen.

5. Verfahren zur elektrostatischen Pulverbeschichtung nach einem oder mehreren der Ansprüche 1 bis 4, dadurch gekennzeichnet, daß vor Aufbringen der Pulverbeschichtung auf das Substrat zunächst eine Haftvermittlerschicht angebracht wird.

6. Verfahren zur elektrostatischen Pulverbeschichtung nach einem oder mehreren der Ansprüche 1 bis 5, dadurch gekennzeichnet, daß das Substrat vor dem Aufbringen der Pulverbeschichtung auf Temperaturen, die 20 bis 80 °C über dem Schmelzpunkt des jeweils eingesetzten Fluorpolymeren liegen, vorgeheizt wird.

## Claims

1. A process for electrostatically powder-coating metallic substrates or substrates metallized at at least one surface with a fluorinated polymer processable from the melt, which comprises carrying out the powder coating with a mixture composed of the fluorinated polymer processable from the melt and from 0.1 to 4 % by weight of potassium titanate fibers, based on the fluorinated polymer.

2. The process for electrostatically powder-coating as claimed in claim 1, wherein the potassium titanate fibers in the mixture have a length of 5 to 1000 »m.

3. The process for electrostatically powder-coating as claimed in claim 1 or 2, wherein the potassium titanate fibers have a diameter of 0.1 to 2 »m.

4. The process for electrostatically powder-coating as claimed in one or more of claims 1 to 3, wherein the potassium titanate fibers have a mean fiber length/mean fiber diameter ratio equal to 50 to 500.

5. The process for electrostatically powder-coating as claimed in one or more of claims 1 to 4, wherein an adhesion-promoting layer is applied to the substrate before the application of the powder coating.

6. The process for electrostatically powder-coating as claimed in one or more of claims 1 to 5, wherein the substrate is preheated to temperatures which are 20 to 80°C above the melting point of the fluorinated polymer used in a particular case before the powder coating is applied.

## Revendications

1. Procédé pour le revêtement électrostatique, à l'aide d'une poudre, de substrats métalliques ou de substrats métallisés sur au moins une surface, à l'aide d'un polymère fluoré à mettre en oeuvre en masse fondue, procédé caractérisé en ce que le revêtement à l'aide d'une poudre est réalisé à l'aide d'un mélange du polymère fluoré utilisable en masse fondue et de 0,1 à 4 % en poids, par rapport au polymère fluoré, de fibres de titanate de potassium.

2. Procédé pour le revêtement électrostatique à l'aide d'une poudre, selon la revendication 1, caractérisé en ce que les fibres de titanate de potassium présentent en mélange une longueur de 5 à 1000 »m.

3. Procédé pour le revêtement électrostatique à l'aide d'une poudre, selon la revendication 1 ou 2, caractérisé en ce que les fibres de titanate de potassium présentent un diamètre de 0,1 à 2 »m.

4. Procédé pour le revêtement électrostatique à l'aide d'une poudre, selon une ou plusieurs des revendications 1 à 3, caractérisé en ce que les fibres de titanate de potassium présentent un rapport entre la longueur moyenne des fibres et le diamètre moyen des fibres valant 50 à 500.

5. Procédé pour le revêtement électrostatique à l'aide d'une poudre, selon une ou plusieurs des revendications 1 à 4, caractérisé en ce qu'avant l'application du revêtement par de la poudre sur le substrat, on applique tout d'abord une couche d'un adjuvant d'adhérence.

6. Procédé pour le revêtement électrostatique à l'aide d'une poudre, selon une ou plusieurs des revendications 1 à 5, caractérisé en ce qu'avant l'application du revêtement par de la poudre, le substrat est préchauffé à des températures supérieures de 20 à 80°C au point de fusion du polymère fluoré utilisé dans chaque cas.
